# EUROPEAN PATENT APPLICATION

(11) **EP 1 243 919 A1**
(43) Date of publication of application: **25.09.2002**
(21) Application number: 00978010.7
(22) Date of filing: 29.11.2000
(51) Int. Cl.: G01N 23/08, A24C 5/34

(54) **X-RAY TESTER**

(30) Priority: 30.11.1999 JP 33980599
(71) Applicant: Japan Tobacco Inc., Tokyo 105-8422 (JP)
(72) Inventor: TORAI, Hiroyuki Japan Tobacco Inc., Tokyo 130-8603 (JP); INOMATA, Shigemitsu Japan Tobacco Inc., Tokyo 114-0004 (JP); TAKAHASHI, Isamu Terenix Inc., Machida-shi Tokyo 194-0004 (JP)
(74) Representative: Reinhard - Skuhra - Weise & Partner
(86) International application number: JP0008438
(87) International publication number: WO01040781

(57) **Abstract**

An apparatus comprises a block element 10 formed of an X-ray blocking member and located in a transportation path for an object of inspection, the block element having a through hole 11 through which the object of inspection passes and a slit 12 opening across the through hole, an X-ray tube 20 located close to and opposite one open end of the slit and capable of generating X-rays toward the through hole, and an X-ray detector 30 located in the other open end of the slit and capable of detecting the X-rays transmitted through the slit. The X-rays that are sharply constricted as they pass through the slit of the block element cross the object of inspection that passes through the through hole. Based on the resulting volume of X-ray transmission, the internal conditions of the object of inspection can be subjected to a non-destructive inspection with ease and high accuracy.

## Description

### TECHNICAL FIELD

The present invention relates to an X-ray inspection apparatus adapted continuously to subject objects of inspection, formed of rod-shaped bodies such as cigarettes, to a non-destructive inspection.

### BACKGROUND ART

In general, cigarettes are manufactured in a manner such that cut tobacco that is continuously supplied at a controlled feed rate is continuously rolled into a rod-shaped, so-called elongate rod cigarette (cigarette rod) with use of an elongate paper in the longitudinal direction thereof, and the rod cigarette is cut to pieces of a given length. Further, a filter may be attached to one end of each cigarette of the given length cut that is from the rod cigarette. The speed of manufacture of these cigarettes, in particular, has been increased more and more, and the speed of cut tobacco rolling with paper itself has become very high.

In order to improve the quality of cigarettes, it is essential to control the packing density of cut tobacco that is continuously rolled up with the paper in the aforesaid manner (density or quantity of tobacco loaded into the paper rolled in a cylinder). Conventionally, therefore, cut tobacco is inspected for packing density by, for example, applying beta rays (radiation) emitted from strontium or the like to elongate rod-shaped cigarettes (cigarette rods) that are transported continuously and detecting the volume of transmitted radiation. Further, an attempt is made to detect the packing density from the volume of transmission of infrared rays or ultrasonic waves.

In the case where the aforesaid radiation is used, however, handling (or managing) a source of radiation is troublesome and involves much radiation noises, so that it is hard to improve the accuracy of inspection. In the case where infrared rays are used, on the other hand, they are easily influenced by the color of cut tobacco. In the case where ultrasonic waves are used, moreover, they are easily influenced by water in cut tobacco. Accordingly, there is an urgent demand for the development of an inspection apparatus that can inspect cut tobacco for packing density with ease and high accuracy.

For some filters that are attached to cigarettes, a plurality of types of filter materials with given lengths may be successively arranged in their axial direction and rolled up, for example. In order to control the quality of these filters, the filter materials are expected to be checked for difference in a non-destructive inspection in like manner. Further, in manufacturing processes for medicines, for example, as well as in the field of cigarette manufacture, a similar non-destructive inspection is expected to be conducted to check tablets or the like for mixed foreign substances.

### DISCLOSURE OF THE INVENTION

The present invention has been contrived taking account of X-rays that cannot be easily influenced by the color or water content of an object of inspection, and its object is to provide an X-ray inspection apparatus, capable of subjecting the internal conditions of the object of inspection to a non-destructive inspection with ease and high accuracy and being handled or managed with ease.

An X-ray inspection apparatus according to the present invention is designed to subject a continuously transported object of inspection to a non-destructive inspection by effectively utilizing the so-called soft X-rays with low X-ray dose, and comprises:
(1) a block element formed of an X-ray blocking member of brass or the like and located in a transportation path for the object of inspection, the block element having a through hole through which the object of inspection passes and a slit opening across the through hole;
(2) an X-ray tube located close to and opposite one open end of the slit of the block element and capable of generating X-rays toward the through hole; and
(3) an X-ray detector attached to the other open end of the slit of the block element and capable of detecting the X-rays transmitted through the slit.

More specifically, the X-ray inspection apparatus according to the present invention is designed so that the X-rays generated by the X-ray tube are guided to the X-ray detector on the side opposite from the block element through the slit in the block element, whereby the X-rays (soft X-rays) of a relatively low intensity generated by the X-ray tube can be thinly sharply constricted, and that the X-rays transmitted through the slit cross the object of inspection that passes through the through hole in the block element. Based on the volume of transmission of the X-rays that cross the object of inspection as if to cut it, the internal conditions of the object of inspection can be subjected to the non-destructive inspection with high accuracy.

In a preferred aspect of the present invention, the block element is provided with an aperture located side by side with the slit without interfering with the through hole and capable of transmitting some of the X-rays generated by the X-ray tube, and the apparatus comprises an auxiliary X-ray detector for detecting the X-rays transmitted through the aperture. The intensity of the X-rays transmitted through the object of inspection, which is detected by means of the X-ray detector, is corrected in accordance with the intensity of the X-rays detected by means of the auxiliary X-ray detector. By doing this, disturbance factors, such as fluctuation of the intensity of the X-rays generated by the X-ray tube, can be eliminated to improve the accuracy of inspection.

In a further preferred aspect of the present invention, the block element is fitted with an X-ray transmitting member for closing the slit, in that region of the through hole of the block element which is crossed by the slit. This X-ray transmitting member is formed of a ring-shaped film member of carbon, for example, and serves to prevent foreign substances that fall from the object of inspection passing through the through hole from getting into the slit, thereby preventing lowering of the inspection accuracy.

Incidentally, the object of inspection is formed of a rod-shaped member, such as a cigarette rod or its filter transported in its axial direction, a tablet, or the like. The slit serves to shape the X-rays like a curtain and guide them to the X-ray detector so that the object of inspection formed of the rod-shaped member is ringed and that profile information on the object of inspection is obtained sequentially as the object passes through the slit.

### BRIEF DESCRIPTION OF THE DRAWINGS

FIG. 1 is a view showing a general configuration of an X-ray inspection apparatus according to one embodiment of the present invention;
FIG. 2 is an exploded perspective view showing the construction of a block element incorporated in X-ray inspection apparatus shown in FIG. 1;
FIG. 3 is a view showing a profile of a principal part of the block element shown in FIG. 2;
FIG. 4 is a diagram showing an example of a configuration of an X-ray transmission detecting element in the X-ray inspection apparatus shown in FIG. 1; and
FIG. 5 is a view showing an example of an X-ray transmitting member fitted in a through hole and pipes holding the X-ray transmitting member.

### BEST MODE FOR CARRYING OUT THE INVENTION

An X-ray inspection apparatus according to one embodiment of the present invention will now be described with reference to the drawings.

This X-ray inspection apparatus is incorporated in, for example, a cigarette manufacturing apparatus, and used for the inspection of cut tobacco in rod-shaped cigarettes (cigarette rods) for packing density, quality control of filter, etc. This X-ray inspection apparatus, in particular, is provided in a transportation path along which a rod-shaped object of inspection, such as a rod-shaped cigarette or filter, is continuously transported in its axial direction in a cigarette manufacturing process.

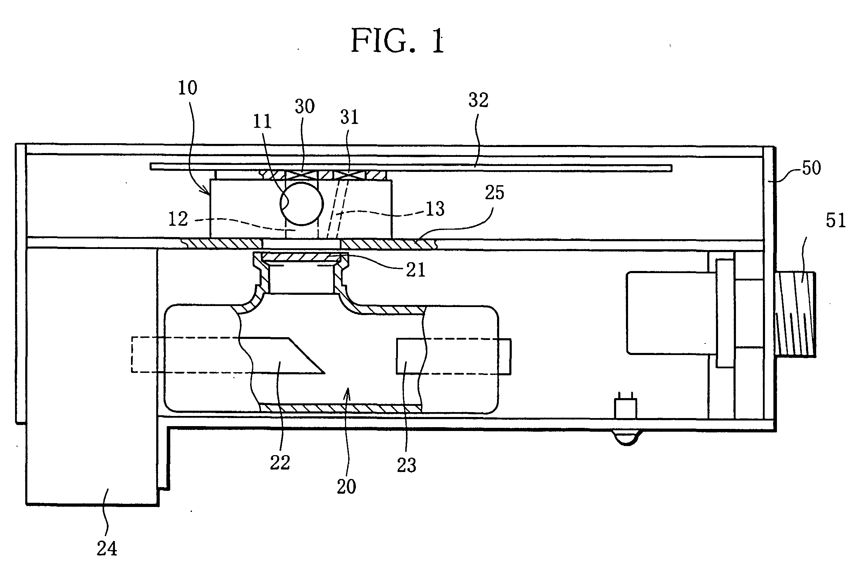

FIG. 1 shows an outline of this X-ray inspection apparatus, in which 10, 20 and 30 denote a block element in the transportation path for the object of inspection, an X-ray tube, and an X-ray detector, respectively. The block element 10 is formed of a member in the shape of a rectangular parallelepiped, such as an X-ray blocking member of brass or the like. The block element 10 is provided with a circular through hole 11, which penetrates its upper and lower surfaces (in the direction perpendicular to the drawing plane of FIG. 1) and through which the object of inspection passes, and a flat slit 12, which penetrates its front and rear faces and opens at right angles to the through hole 11. Further, the block element 10 is provided with an aperture 13 that penetrates its front and rear faces and is located side by side with the slit 12 without interfering with the through hole 11.

The block element 10, which is provided with the through hole 11, slit 12, and aperture 13 in this manner, is formed of two blocks 10a and 10b that are vertically joined and united in the manner mentioned later. The through hole 11 is provided in the center of the blocks 10a and 10b so that their axes are in alignment. Further, the slit 12 and the aperture 13 are formed individually by providing the lower surface or joint surface of an upper block 10a on a lower block 10b with grooves having given widths and given depths.

The X-ray tube 20 is located close to a side portion of block element 10 in which the slit 12 and the aperture 13 open. An X-irradiation port 21 in the central side portion of the X-ray tube 20, in particular, is opposed to the opening of the slit 12. This X-ray tube 20 is a small-sized tube with a diameter of about 40 mmφ, for example, and is of a low-power type that is driven with voltage of less than 10 kV (approx. 10 kV) and current of about 3 mA. In the X-ray tube 20, an anode 22 receives electrons emitted from its cathode (heater) 23, and X-rays (soft X-rays) are generated from the anode 22 and directed toward the X-irradiation port 21. These X-rays are radiated through the X-irradiation port 21 in a conical pattern having its vertex on the anode 22.

The slit 12 and the aperture 13 in the block element 10 described above serve individually to guide some of the X-rays thus emitted from the X-ray tube 20 to the rear face side of the block element 10. The slit 12, in particular, serve to constrict the X-rays as flat beams corresponding to the shape of its opening and to guide the beams to the rear face side of the block element 10 across the through hole 11 in a manner such that the beams ring the object of inspection that passes through the through hole 11.

The anode 22 of the X-ray tube 20 is coupled to a heat sink 24 so that heat generated as the X-ray tube 20 is driven can be efficiently radiated through the heat sink 24. Further, the heat sink 24 is provided with a cooling water circulation hole (not shown), and its heat radiation effect is enhanced as cooling water is circulated in the cooling water circulation hole, whereby the operating characteristics of the X-ray tube 20 are stabilized. Furthermore, a thermal shielding plate 25 is provided between the X-ray tube 20 and the block element 10. The thermal shielding plate 25 serves to prevent the heat generated by the X-ray tube 20 from being transmitted to the block element 10.

On the other hand, the X-ray detector 30, formed of a PIN diode, for example, is attached to the opening portion of the slit 12 on the rear face side of the block element 10. The X-ray detector 30 receives the X-rays transmitted through the slit 12 in the block element 10 and detects their intensity. Since the slit 12 is provided crossing the through hole 11 at right angles thereto, as mentioned before, in particular, the X-ray detector 30 can detect the intensity of the transmitted X-rays that are transmitted ringing the object of inspection that passes through the through hole 11.

On the other hand, an auxiliary X-ray detector 31 is provided in the opening portion of the aperture 13 on the rear face side of the block element 10. The auxiliary X-ray detector 31 is formed of a PIN diode that has the same specifications with the X-ray detector 30. This auxiliary X-ray detector 31 serves to detect some of the X-rays generated by the X-ray tube 20 directly through the aperture 13, that is, without allowing the X-rays to be transmitted to the object of inspection that passes through the through hole 11. The X-ray intensity that is detected by means of the auxiliary X-ray detector 31 is used as a processing criterion (reference) for the transmitted X-rays, as mentioned later. The X-ray intensity (processing criterion) detected by means of the auxiliary X-ray detector 31 is utilized to correct fluctuation or the like of the X-rays generated by the X-ray tube 20, thereby enhancing the accuracy of a non-destructive inspection on the object of inspection based on the intensities of the transmitted X-rays.

Incidentally, the respective sensor surfaces of the X-ray detector 30 and the auxiliary X-ray detector 31 used have the same plane configuration with the respective opening portions of the slit 12 and the aperture 13. The X-ray detector 30 and the auxiliary X-ray detector 31 are located intimately in contact with the rear face of the block element 10 in a manner such that their sensor surfaces are situated in the opening portions of the slit 12 and the aperture 13, respectively. In consequence, the X-ray detector 30 and the auxiliary X-ray detector 31 can receive only the X-rays having passed individually through the slit 12 and the aperture 13 with their respective entire sensor surfaces and detect their intensities with high sensitivity.

Further, the respective sensor surfaces of the X-ray detector 30 and the auxiliary X-ray detector 31 generate potential noise components. Since the sensor surfaces are held to minimum necessary sizes, as mentioned before, however, the level of noises that are mixed in detection signals can be minimized. Although the detected X-rays have their general intensity enhanced as they pass through the slit 12 and the aperture 13, in consequence, their S/N ratio can be made high enough, and therefore, the detection accuracy can be improved.

Provided on the backside of the X-ray detector 30 and the auxiliary X-ray detector 31, moreover, is an X-ray blocking plate 32 that is formed of a large-sized (large-area) glass-epoxy printed board, whereby the X-rays generated by the X-ray tube 20 can be prevented from leaking out. The X-ray blocking plate (glass-epoxy printed board) 32 serves to hold and electrically wire the X-ray detector 30 and the auxiliary X-ray detector 31, and besides, to mount a detecting element, which will be mentioned later. Alternatively, however, a box-shaped enclosure 50 may be given the function of the X-ray blocking plate 32 so that a small-sized (small-area) printed board for holding and electrically wiring the X-ray detector 30 and the auxiliary X-ray detector 31 can be only provided on the rear face side of the block element 10.

The block element 10, X-ray tube 20, etc. described above are integrally stored in the box-shaped enclosure 50 and unitized, and are incorporated as one unit in the transportation path for rod-shaped cigarettes or filters in the cigarette manufacturing apparatus. Further, the X-ray inspection apparatus unitized in this manner is connected electrically to an external control circuit (not shown) or the like by means of a connector 51 attached to the enclosure 50 and driven thereby. Moreover, signals (detection signals) for the X-ray intensities detected individually by means of the X-ray detector 30 and the auxiliary X-ray detector 31 are fetched through the connector 51.

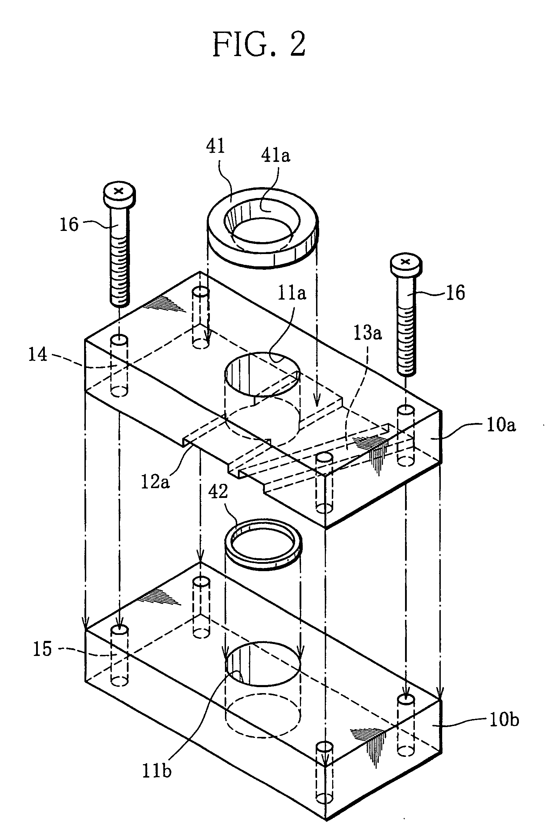

The following is an additional detailed description of the block element 10 and the through hole 11, slit 12, etc. of the block element 10. FIG. 2 is an exploded perspective view showing the construction of the block element 10. The block element 10 is formed of the two vertically separable blocks 10a and 10b in the shape of a rectangular parallelepiped each. These blocks 10a and 10b are provided, respectively, with circular through holes 11a and 11b that vertically penetrate them. The block element 10 is constructed by joining and uniting the blocks 10a and 10b in a manner such that the through holes 11a and 11b are aligned coaxially. The through holes 11a and 11b are formed as holes such that their inside diameter corresponds to the outside diameter of the object of inspection (rod-shaped cigarette or filter) transported through the through hole 11 or is a little greater than the maximum diameter of the object, for example.

Further, the blocks 10a and 10b are joined and united in a manner such that bolt holes 14 and tapped holes 15 are previously bored in pairs in positions off the through holes 11a and 11b, e.g., in positions near their four corners, so that bolts 16 passed individually through the bolt holes 14 can be screwed individually into the tapped holes 15.

A groove 12a is provided on the lower surface or joint surface of the upper block 10a on the lower block 10b so as to cross the through hole 11a and linearly connect the front and rear faces of the block 10a. The groove 12a has a width substantially equal to the diameter of the through hole 11a and a rectangular cross section having a groove depth of about 0.5 to 2.0 mm that realizes a slit width corresponding to a resolution to be detected. Further, a groove 13a that obliquely linearly connects the front and rear faces of the block 10a without interfering with the through hole 11a is provided beside the groove 12a on the lower surface of the upper block 10a. The groove 13a is formed having a width and groove width substantially equal to those of the groove 12a.

When the two blocks 10a and 10b are joined and united as mentioned before, the respective opening planes of these grooves 12a and 13a are closed by means of the top face of the block 10b, whereupon the slit 12 and the aperture 13 having rectangular cross sections are formed. Although the slit 12 is once disconnected in the region where it crosses the through hole 11 (11a), and opens into the through hole 11 (11a), it substantially forms one continuous straight slit that imaginarily connects the opposite opening regions.

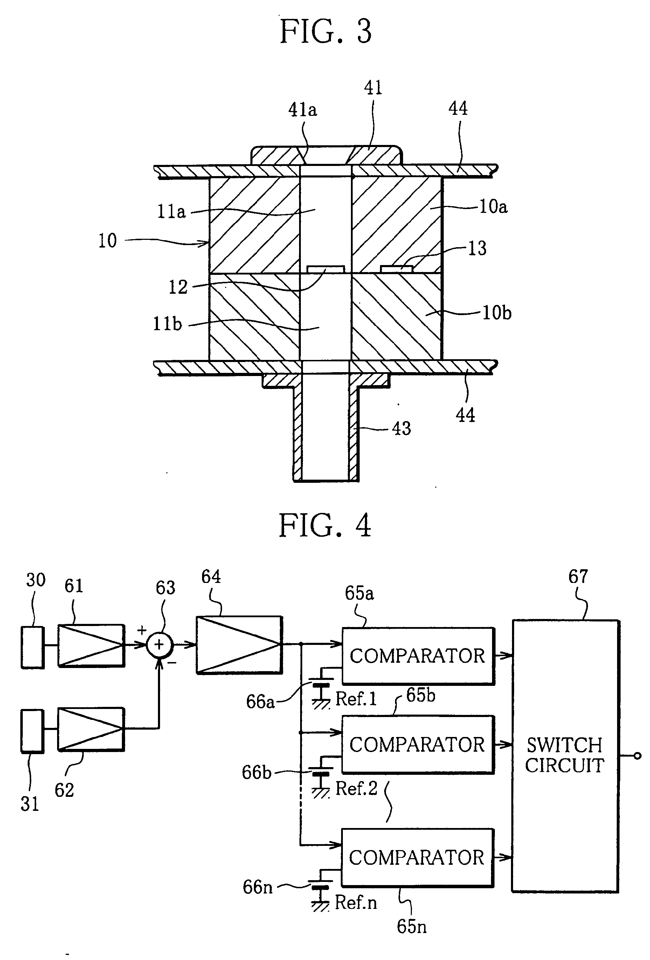

A ring-shaped guide element 41 for smoothly guiding the object of inspection into the through hole 11 is provided on one end portion of the through hole 11 (11a, 11b) of the block element 10 constructed in this manner. As shown in FIG. 3 that illustrates the block element 11 and the profile of its peripheral portion, the guide element 41 has its inner peripheral wall 41a tapered inward. If the object of inspection is somewhat eccentric when it is transported into the block element 10, the inner peripheral wall 41a serves to guide the object of inspection into the central portion of the through hole 11.

Further, an X-ray transmitting member 42 that is formed of, e.g., a carbon ring element, is attached to the region in the through hole 11 that is crossed by the slit 12. The X-ray transmitting member 42 has a width a little wider than the width of the slit 12 (depth of the groove 12a), and is a thin structure having a thickness of, e.g., about 0.5 mm such that it hardly narrows the bore of the through hole 11. The X-ray transmitting member 42 is fitted in and attached to the through hole 11 so as to close the opening portion of the slit 12 that opens into the through hole 11, and serves to prevent foreign substances that fall down from the object of inspection passing through the through hole 11 from getting into the slit 12. The X-ray transmitting member 42 never prevents transmission of the X-rays that are guided through the slit 12 into the through hole 11, and may preferably be formed of beryllium, which is expensive though.

The X-ray transmitting member 42 is previously fitted into the through hole 11a as the upper and lower paired blocks 10a and 10b are coupled and united. Alternatively, however, the X-ray transmitting member 42 may be held from upper and lower sides by means of a rod-shaped jig (not shown) and inserted into the through hole 11 to be located in the opening portion of the slit 12 after the blocks 10a and 10b are coupled and united. It can be attached to the opening portion of the slit 12 by removing the jig only, thereafter.

A cylinder 43 that is coupled to the through hole 11b of the lower block 10b in FIG. 3 is a guide for guiding the object of inspection passed through the block element 11 to a transportation path in a subsequent stage (next stage). The cylinder 43 and the guide element 41 are attached to the block element 10 by suitably using conventional connecting means (not shown in particular) such as screwing. Further, the cylinder 43 and the guide element 41 may be connected directly to the block element 10. It is to be understood, however, that they may be connected by means of a frame 44 that supports the block element 10 on the aforesaid enclosure 50, as shown in FIG. 3.

The X-ray transmission detecting element of the X-ray inspection apparatus constructed in this manner is arranged in the manner shown in FIG. 4, for example. The X-ray detector 30 and the auxiliary X-ray detector 31, which are formed of a PIN diode or the like each, individually detect the X-rays that are incident through the slit 12 and the aperture 13, as mentioned before, and output signals corresponding to the X-ray intensities. The signal delivered from the X-ray detector 30 corresponds to the intensity of the transmitted X-rays transmitted through the object of inspection that is guided to the through hole 11, and is a signal indicative of the intensity that is attenuated in accordance with the X-ray transmission factor (density of the object of inspection) that depends on the object of inspection. On the other hand, the signal delivered from the auxiliary X-ray detector 31 corresponds to the intensity of the X-rays that are generated by the X-ray tube 20 and only passed through the aperture 13.

After the signals delivered from the X-ray detectors 30 and 31 are amplified by means of preamplifiers 61 and 62, respectively, they are applied to the input of an adder 63, whereupon the difference between them is obtained. More specifically, the transmitted X-ray intensity signal detected by means of the X-ray detector 30 is subjected to non-inverted amplification by means of the preamplifier 61 and applied to the adder 63. On the other hand, the X-ray intensity signal detected by means of the auxiliary X-ray detector 31 is subjected to inverted amplification by means of the preamplifier 62 and applied to the adder 63. Then, the adder 63 obtains the difference between the transmitted X-ray intensity detected by means of the X-ray detector 30 and the X-ray intensity detected by means of the auxiliary X-ray detector 31, thereby obtaining attenuation of the X-rays that are transmitted through the object of inspection. After the signals obtained by this differential processing, that is, the signals indicative of the intensities of the transmitted X-rays that are transmitted through the object of inspection, are amplified to given signal levels by means of an amplifier 64, they are applied individually to comparators 65a, 65b, ...... 65n, whereupon they are compared with, for example, references Ref.1, Ref.2, ...... Ref.n that are previously set by means of reference voltage sources 66a, 66b, ...... 66n.

The aforesaid references Ref.1, Ref.2, ...... Ref.n, which are threshold values for the discrimination and decision of the quality of the object of inspection (e.g., packing density of cut tobacco or filter material), are set in accordance with the specifications of the object of inspection. A switch circuit 67 alternatively delivers decision outputs of the comparators 65a, 65b, ...... 65n in accordance with the inspection specifications or successively scans and delivers the decision outputs of the comparators 65a, 65b, ...... 65n.

A control device (not shown) in the cigarette manufacturing apparatus in which the X-ray inspection apparatus is incorporated ejects those objects of inspection, such as rod cigarettes (cigarette rods), filter rods, etc., which fail to fulfill given quality criteria, for example, from their production line in accordance with the result of decision on the transmitted X-ray intensities obtained by means of the switch circuit 67, thereby maintaining a fixed level of product quality.

It is to be understood that the fluctuation itself of the intensity of X-rays generated by the X-ray tube 20, in detecting the transmitted X-ray intensity, can be corrected with reference to the X-ray intensity that is detected by means of the auxiliary X-ray detector 31, for example. In this case, it is necessary only that the amplification degree of the amplifier 64 be variably adjusted in accordance with the output of the auxiliary X-ray detector 31, for example. In this case, the adder 63 may be composed of a differential amplifier that can subject the respective outputs of the X-ray detectors 30 and 31 to differential arithmetic processing, and such that the gain of the differential amplifier can be variably controlled by means of the output of the auxiliary X-ray detector 31. It is to be understood, moreover, that the X-ray detector 30 and the auxiliary X-ray detector 31 may be located close to each other so that the X-ray detectors 30 and 31 are subject to substantially the same temperature conditions, whereby error factors that are attributable to temperature drifts of the X-ray detectors 30 and 31 themselves can be canceled.

Thus, according to the X-ray inspection apparatus constructed in this manner, the X-rays generated from the X-ray tube 20 are constricted like a curtain by means of the slit 12 in the block element 10 and caused to cross the object of inspection passing through the through hole 11 substantially at right angles thereto. In the X-ray detector 30, therefore, only those X-rays which are transmitted ringing the object of inspection can be detected securely. In other words, the slit 12 is provided crossing the through hole 11 in the block element 10 through which the object of inspection is passed, so that the X-rays that pass through the slit 12 never fails to cross the object of inspection in the through hole 11, and only the X-rays having crossed the object of inspection can reach the X-ray detector 30. Consequently, the X-ray detector 30 can securely detect only those transmitted X-rays which are guided across (or transmitted through) the object of inspection.

Since the slit 12 crosses the through hole 11 substantially at right angles to its axial direction and is formed having a narrow width in the axial direction of the through hole 11, moreover, the X-rays are transmitted as if to ring the object of inspection in the through hole 11. In consequence, the X-rays that pass through the slit 12 form a transmissive cross section or local slice of the rod-shaped object of inspection as they are transmitted through the object of inspection, so that the X-ray detector 30 can detect only the state (packing density, etc.) of the object of inspection on the transmissive cross section.

If the intensity of the X-rays generated by the X-ray tube 20 is low (soft X-rays), according to the X-ray inspection apparatus constructed in this manner, therefore, the X-rays can be sharply constricted by means of the slit 12 as they are transmitted through the object of inspection, and the transmitted X-rays can be guided to the X-ray detector 30. In the X-ray detector 30, moreover, only those X-rays which are transmitted through the slit 12 are detected, so that the S/N ratio of the X-ray detection can be made high enough to improve the detection accuracy. Since the X-ray detector 30 detects only those X-rays which are transmitted through the slit 12, in particular, the state of the object of inspection can be detected with a resolution that is defined by the width of the slit 12.

As mentioned before, moreover, the X-rays that are transmitted through the aperture 13 without being transmitted through the object of inspection are detected by means of the auxiliary X-ray detector 31, and they are used to correct the transmitted X-ray intensity. If the intensity of the X-rays generated by the X-ray tube 20 is caused to fluctuate by the change of the anode voltage of the X-ray tube 20 or the like, therefore, the fluctuation of the X-ray intensity can be effectively corrected as the object of inspection is inspected.

According to the arrangement described above, moreover, the object of inspection is ringed by means of the slit 12 as the state of the region of X-ray transmission is detected, so that the inspection region (X-ray transmission position) of the object of inspection changes in due order as the object of inspection that passes through the through hole 11 moves. As the object of inspection passes through the through hole 11, therefore, it is ringed in due order in its axial direction, whereby individual regions can be continuously inspected for state. If the width of the slit 12 is narrowed, in this case, the inspection resolution in the axial direction of the object of inspection can be improved satisfactorily.

Since the X-ray tube 20 and the block element 10 are shielded by means of the thermal shielding plate 25, moreover, there is no possibility of any trouble, such as the block element 10 being distorted by the heat generated by the X-ray tube 20 and causing distortion of the opening profile of the slit 12. Since this thermal countermeasure can narrow the location distance between the X-ray tube 20 and the block element 10, therefore, the X-rays generated by the X-ray tube 20 can be used fully effectively.

According to the apparatus described above, furthermore, the non-destructive inspection on the object of inspection can be conducted by effectively using soft X-rays, so that there is no need of troublesome management that is conventionally required in handling radiation, and there are no error factors that are attributable to the use of infrared rays or ultrasonic waves. Since high detection accuracy of a certain degree can be secured if the X-ray tube 20 is driven at a low voltage of less than 10 kV, moreover, the management and operation of the X-ray tube are easy.

The present invention is not limited to the embodiment described above. For example, the heat sink 24 that is attached to the X-ray tube 20 may be of an air-cooled type or heat-pipe type. Further, the X-ray tube 20 may be covered entire by means of the thermal shielding plate 25 so that the block element 10 is prevented from being thermally influenced by the X-ray tube 20. Furthermore, the size of the slit 12 may be set in accordance with the size (thickness) of the object of inspection, detection accuracy, etc.

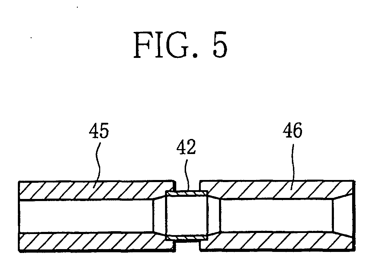

In loading the ring-shaped X-ray transmitting member 42 into the through hole 11, moreover, the X-ray transmitting member 42 may be held between two pipes 45 and 46 that have an outside diameter equivalent to the inside diameter of the through hole 11, as shown in FIG. 5, for example, so that they can be fitted as an integral structure into the through hole 11. In this case, the pipes 45 and 46 of a plurality of types that are varied in thickness to have different inside diameters are prepared so that they can be used corresponding to the outside diameter of the object of inspection. Thus, the pipes 45 and 46 themselves can be used as guide elements for the object of inspection in the through hole 11. If the X-ray transmitting member 42 is held between the pipes 45 and 46 as it is fitted into the through hole 11 in this manner, the X-ray transmitting member 42 can be attached steadily even in case it is formed of a fragile material based on carbon.

The X-ray transmitting member 42 may be formed of, for example, an engineering plastic called polyether-ether-ketone material, in place of beryllium or carbon. In this case, the X-ray transmitting member 42 should only be realized as an elongate pipe element (cylindrical element) that integrally includes the pipes 45 and 46 so that the pipe element (cylindrical element) can be fitted into the hole area of the through hole 11. With use of this arrangement, the X-ray transmitting member 42 can be simplified in construction and easily attached to the block element 11. Since the transportation path for the object of inspection that is defined by the inner wall surface of the X-ray transmitting member 42 is a smooth seamless path, moreover, a secondary effect can be produced such that foreign substances falling from the object of inspection are reduced.

Although the rod-shaped object of inspection has been described herein as being guided to the through hole 11 to be used in the inspection of the packing density of cut tobacco or the filter material in the cigarette manufacturing apparatus, the invention may be also applied to the inspection of foreign substances mixed in tablets in a tablet manufacturing process, for example. Further, the invention may be also applied to an inspection apparatus for foreign substances in noodles or the like. Besides, various modifications may be effected in the present invention without departing from the spirit of the invention.

### INDUSTRIAL APPLICABILITY

According to the present invention, X-rays are constricted in a block element, which has a through hole for the passage of an object of inspection, by means of a slit that crosses the through hole, and the X-rays are passed ringing the object of inspection in the through hole, so that the state of the cross section of the object of inspection can be subjected to a non-destructive inspection effectively and accurately. In particular; the inspection can be conducted without being influenced by the color or water content of the object of inspection.

Besides, the fluctuation or the like of the X-rays can be effectively corrected as the respective states of individual regions of the object of inspection in the through hole are inspected continuously. Since the X-rays are sharply constricted by means of the slit in the block element that has the through hole, moreover, the general construction can be made compact, and nevertheless, the X-ray detection accuracy can be improved.

## Claims

1. An X-ray inspection apparatus provided on a transportation path for a continuously transported object of inspection and capable of applying X-rays to said object of inspection and detecting the transmitted X-rays, thereby conducting a non-destructive inspection on said object of inspection, the X-ray inspection apparatus comprising:
a block element formed of an X-ray blocking member, having a through hole through which said object of inspection passes, having a slit opening across the through hole, and located in said transportation path;
an X-ray tube located opposite one open end of said slit of the block element and capable of generating X-rays toward said through hole; and
an X-ray detector located in the other open end of said slit of said block element and capable of detecting the X-rays transmitted through said slit.

2. An X-ray inspection apparatus according to claim 1, wherein said block element is formed of brass.

3. An X-ray inspection apparatus according to claim 1, wherein said slit is located crossing said through hole at right angles thereto.

4. An X-ray inspection apparatus according to claim 1, wherein said block element is provided with an aperture located side by side with said slit without interfering with said through hole and capable of transmitting some of the X-rays generated by said X-ray tube, and which further comprises an auxiliary X-ray detector attached to an opening end of said aperture of said block element and capable of detecting the X-rays transmitted through said aperture.

5. An X-ray inspection apparatus according to claim 1, wherein said block element is fitted with an X-ray transmitting member for closing said slit, in that region of said through hole which is crossed by said slit.

6. An X-ray inspection apparatus according to claim 5, wherein said X-ray transmitting member attached to that region of said through hole which is crossed by said slit and capable of closing said slit is formed of a ring-shaped film member of carbon.

7. An X-ray inspection apparatus according to claim 1, wherein said object of inspection is formed of a rod-shaped body transported in the axial direction thereof, and said slit serves to shape said X-rays like a curtain and guide the X-rays to said X-ray detector so that said object of inspection formed of the rod-shaped body is ringed and that profile information on said object of inspection is obtained sequentially as the object passes through the slit.
